# EUROPÄISCHE PATENTSCHRIFT

(11) **EP 2 424 765 B1**
(45) Veröffentlichungstag und Bekanntmachung des Hinweises auf die Patenterteilung: **09.07.2014**
(21) Anmeldenummer: 10715841.2
(22) Anmeldetag: 27.04.2010
(51) Int. Cl.: B62D 5/083

(54) **LENKVENTIL MIT PLANETENGETRIEBE**
STEERING VALVE HAVING A PLANETARY GEAR TRAIN
VANNE DE DIRECTION À TRAIN ÉPICYCLOÏDAL

(30) Priorität: 27.04.2009 DE 102009018738; 17.09.2009 DE 102009029532
(43) Veröffentlichungstag der Anmeldung: 07.03.2012
(73) Patentinhaber: Ford Global Technologies, LLC, Dearborn, MI 48126 (US)
(72) Erfinder: JANZ, Bernd, 40764 Langenfeld (DE); MÜLLER, Jens-Hauke, 42489 Wülfrath (DE); KIRSCHBAUM, Sven, 40822 Mettmann (DE)
(74) Vertreter: Bauer Vorberg Kayser Patentanwälte
(86) Internationale Anmeldenummer: PCT/EP2010/055593
(87) Internationale Veröffentlichungsnummer: WO 2010/125044

(56) Entgegenhaltungen:
- DE-A1-102004 049 686
- DE-A1-102006 055 279
- JP-A- 2004 256 087

## Beschreibung

Die vorliegende Erfindung betrifft eine Servolenkbaugruppe für eine hydraulische Servolenkung von Kraftfahrzeugen nach dem Oberbegriff des Patentanspruchs 1. Darüber hinaus betrifft die Erfindung ebenso ein Verfahren zur Lenkunterstützung einer hydraulischen Servolenkung von Kraftfahrzeugen nach dem Oberbegriff des Patentanspruchs 10.

Servolenkbaugruppen für hydraulische Servolenkungen von Fahrzeugen umfassen unter anderem Servoventile, die auch als Drehservoventile oder Drehschieberventile bekannt sind. Diese regeln den Hydraulikdruck und damit die Lenkunterstützung in Abhängigkeit vom aufgebrachten Lenkmoment des Fahrers. Es kommen meist Drehschieberventile zum Einsatz, bei denen sich eine Eingangswelle, die über eine Lenksäule mit einem Lenkrad verbunden ist, relativ zu einem Ventilteil (auch als Steuerhülse oder Sleeve bezeichnet) verdreht, das mit der Ausgangswelle und bei Zahnstangenlenkungen mit einem Lenkritzel (auch als Pinion bezeichnet) verbunden ist. Durch ein Torsionssystem zwischen Eingangswelle und Stellglied werden eine drehmomentabhängige Verstellung des Stellglieds des Servoventils und damit eine drehmomentabhängige Ventilcharakteristik realisiert.

Zur Verwirklichung diverser weiterer Funktionen eines Momentenstellers, beispielsweise Spurhalteassistent, Über- und Untersteuerungsassistent, haptisches Feedback, variable Lenkunterstützung zum Beispiel in Abhängigkeit der Fahrzeuggeschwindigkeit oder Beladung, Citymode, automatisches Einparken, Lenkmomentüberlagerung usw., ist eine vom anliegenden Drehmoment unabhängige Einstellung der Stellung des Stellglieds zur Beeinflussung der Lenkunterstützungscharakteristik des Servoventils wünschenswert.

Ein derartiges Servolenkventil ist in der Offenlegungsschrift DE 10 2004 049 686 A1 beschrieben. Die Druckschrift offenbart einen Verstellmechanismus für ein hydraulisches Lenkventil, bei dem ein Hohlrad eines Planetengetriebes drehfest und ein zweites Hohlrad eines zweiten Planetengetriebes drehbar gelagert ist. Das zweite Hohlrad kann über einen Aktuator begrenzt verdreht werden. Der Aktuator ist als elektrischer Stelltrieb ausgeführt, beispielsweise als Elektromotor, dessen Drehbewegung in eine Hubbewegung umgewandelt wird. Die Hubbewegung wird über einen Hebel auf das drehbare Hohlrad übertragen. Ein Verdrehen des drehbaren Hohlrads bewirkt eine Verdrehung eines Stellglieds des Servoventils. Dies ermöglicht die Einstellung eines Relativwinkels zwischen dem Stellglied und einer Ausgangswelle des Servoventils.

Aus der JP 2004 256087 A ist eine Servolenkbaugruppe für eine hydraulische Servolenkung von Kraftfahrzeugen bekannt, die im Wesentlichen ein hydraulisches Servoventil mit einem Stellglied, zwei Planetengetriebe und einen als Motor ausgeführten Aktuator aufweist. Die Planetengetriebe dienen dazu, eine Drehbewegung einer Eingangswelle mit einem durch die Planetengetriebe vorgegebenen Übersetzungsverhältnis auf eine Ausgangswelle zu übertragen. Das Übersetzungsverhältnis ist mittels des Motors durch Rotation eines den beiden Planetengetrieben gemeinsamen Planetenträgers veränderbar.

Zur Realisierung der weiter oben aufgeführten Funktionen eines Momentenstellers ist es erforderlich, sehr kleine Relativverstellungen, Insbesondere Relativwinkel unter 1/10 Grad, einstellen zu können. Bedingt durch das Übersetzungsverhältnis der Planetengetriebe wird ein Differenzwinkel zwischen den Hohlrädern nach dem Stand der Technik leicht verstärkt auf einen Relativwinkel zwischen Stellglied und Ausgangswelle übertragen. Somit muss der an dem drehbar gelagerten Hohlrad eingestellte Differenzwinkel deutlich unter 1/10 Grad liegen. Hierfür ist ein hochpräziser und für diese Anwendung teurer Aktuator erforderlich. Ebenfalls ist für die präzise Einstellung des Differenzwinkels eine nahezu spielfreie Anlenkung des drehbar gelagerten Hohlrads erforderlich, was sich neben einer aufwändigen Mechanik ebenso ungünstig auf die Herstellungskosten auswirkt. Darüber hinaus ist eine langlebige und wartungsarme Abdichtung zwischen dem Aktuator und dem Hebel zur Anlenkung des Hohlrads lediglich mit hohem Aufwand zu gewährleisten, da der Hebel während eines Verstellvorgangs keine lineare Bewegung ausführt, sondern sich entlang einer gekrümmten Bahnkurve bewegt.

Ausgehend vom Stand der Technik liegt der Erfindung die Aufgabe zugrunde, die Servolenkbaugruppe der eingangs genannten Art dahingehend weiterzubilden, den Einsatz einer preiswerten Aktuatorik und zudem eine präzise, insbesondere spielarme Verstellung des Stellglieds eines hydraulischen Servoventils zu ermöglichen. Darüber hinaus ist es Aufgabe der Erfindung, eine kompakte und platzsparende Servolenkbaugruppe bereitzustellen.

Ferner ist es Aufgabe der Erfindung, ein Verfahren zur Lenkunterstützung einer hydraulischen Servolenkung bereitzustellen, das den Einsatz einer preiswerten Aktuatorik und eine spielarme Verstellung des Stellglieds eines hydraulischen Servoventils ermöglicht.

Diese Aufgaben werden in Bezug auf die Servolenkbaugruppe durch die Merkmale des Patentanspruchs 1 sowie in Bezug auf das Verfahren durch die Merkmale des Patentanspruchs 9 gelöst. Weitere, besonders vorteilhafte Ausgestaltungen der Erfindung offenbaren die Unteransprüche.

Die Beschreibung charakterisiert und spezifiziert die Erfindung insbesondere im Zusammenhang mit den Figuren zusätzlich.

Erfindungsgemäß umfasst die Servolenkbaugruppe für eine hydraulische Servolenkung, wie sie insbesondere in Kraftfahrzeugen zum Einsatz kommt, wenigstens ein hydraulisches Servoventil, wenigstens zwei Planetengetriebe und wenigstens einen Aktuator.

Das hydraulische Servoventil weist im Wesentlichen eine Eingangswelle, eine Ausgangswelle und ein Stellglied auf. Das Stellglied, auch als Steuerelement bezeichnet, dient zur Steuerung der Lenkunterstützung in Abhängigkeit der Relativverdrehung der Eingangswelle gegenüber der Ausgangswelle. Unter dem Begriff "Stellglied" ist in dieser Beschreibung stets das Zusammenwirken von im Wesentlichen zwei Funktionseinheiten, nämlich der Steuerhülse einerseits und den eingangswellenseitigen Steuerkanten andererseits, zu verstehen.

Die wenigstens zwei Planetengetriebe, die jeweils drei Funktionselemente aufweisen, dienen zur Übertragung der Drehbewegung einer Welle des hydraulischen Servoventils, nämlich der Eingangswelle oder der Ausgangswelle, auf das Stellglied. Unter dem Begriff "Funktionselement" ist in dieser Beschreibung entweder ein Sonnenrad, ein oder mehrere Planetenräder oder ein Hohlrad eines Planetengetriebes zu verstehen. Die hierin beschriebene, besonders bevorzugte Ausführungsform weist beispielsweise Planetengetriebe auf, bei denen das erste Funktionselement ein Sonnenrad, das zweite Funktionselement ein oder mehrere Planetenräder und das dritte Funktionselement ein Hohlrad ist. Es sei jedoch darauf hingewiesen, dass für die erfindungsgemäße Servolenkbaugruppe ebenso Planetengetriebe zum Einsatz kommen können, die jeweils als erstes Funktionselement ein Hohlrad, als zweites Funktionselement ein oder mehrere Planetenräder und als drittes Funktionselement ein Sonnenrad aufweisen. Um zum Gegenstand der Erfindung zu gelangen, ist es demnach unerheblich, ob eine zu übertragende Kraft über ein Hohlrad in das Planetengetriebe eingeleitet und nach der Übertragung an einem Sonnenrad ausgeleitet wird oder ob die zu übertragende Kraft über ein Sonnenrad in das Planetengetriebe eingeleitet und nach der Übertragung an einem Hohlrad wieder ausgeleitet wird. Hohlrad und Sonnenrad eines für den erfindungsgemäßen Gegenstand verwendeten Planetengetriebes sind in ihrer Funktion als zueinander äquivalent anzusehen.

Das erste Planetengetriebe ist dem Stellglied des Servoventils zugeordnet und das zweite Planetengetriebe ist der Eingangswelle oder der Ausgangswelle des Servoventils zugeordnet, wobei jeweils das erste Funktionselement, beispielsweise das Sonnenrad, mit dem Stellglied bzw. der Eingangswelle oder der Ausgangswelle verbunden ist. Die zweiten Funktionselemente, beispielsweise die Planetenräder, sind jeweils zur Kopplung der Planetengetriebe vorgesehen. Die Kopplung der zwei Planetengetriebe wird mittels eines gemeinsamen Planetenträgers erzielt, welcher die Planetenräder der zwei Getriebe jeweils auf gemeinsamen Wellen trägt. Die zweiten Funktionselemente, beispielsweise die Planetenräder, können sich hierbei unabhängig voneinander auf den Wellen drehen. Die dritten Funktionselemente der Planetengetriebe, beispielsweise die Hohlräder, sind voneinander unabhängig drehbar gelagert.

Der wenigstens eine Aktuator der erfindungsgemäßen Servolenkbaugruppe dient zur Relativverstellung des Stellglieds gegenüber der Eingangswelle oder der Ausgangswelle. Dies ermöglicht eine Beeinflussung der Lenkunterstützungscharakteristik. Hierbei ist zu verstehen, dass die durch einen Fahrer an der Eingangswelle hervorgerufene Drehbewegung unabhängig von der Aktivität des Aktuators stets an die Ausgangswelle übertragen wird. Selbst in dem Fall beispielsweise, in dem der Aktuator ausfällt, ist die normale Funktion der Servolenkbaugruppe gewährleistet.

Die erfindungsgemäße Servolenkbaugruppe zeichnet sich gegenüber dem Stand der Technik dadurch aus, dass der wenigstens eine Aktuator die dritten Funktionselemente der Planetengetriebe, beispielsweise die Hohlräder, gleichsinnig verdreht und gleichzeitig die dritten Funktionselemente relativ zueinander verdreht. Somit stellt der Aktuator einen Differenzwinkel zwischen den dritten Funktionselementen der Planetengetriebe ein. Dieser Differenzwinkel wird durch die Übersetzung der Planetengetriebe leicht verstärkt auf eine Relativverstellung, insbesondere einen Relativwinkel, zwischen Stellglied und Eingangswelle oder Ausgangswelle übertragen. Die gleichsinnige Verdrehung unter gleichzeitiger Relativverdrehung der beiden dritten Funktionselemente der Planetengetriebe zueinander zur Einstellung einer vergleichsweise kleinen Relativverstellung, insbesondere eines Relativwinkels, zwischen Stellglied und Eingangswelle oder Ausgangswelle führt hinsichtlich des Stands der Technik dazu, dass mit einem betragsmäßig großen absoluten Drehwinkel, den jedes dritte Funktionselement zurücklegt und der vom Aktuator bewirkt wird, wenigstens die gleiche Relativverstellung, insbesondere der gleiche Relativwinkel, zwischen Stellglied und Eingangswelle oder Ausgangswelle wie im Stand der Technik eingestellt wird. Auf diese Weise erhöht die erfindungsgemäße Vorrichtung die Einstellgenauigkeit der Relativverstellung zwischen Stellglied und Eingangswelle oder Ausgangswelle. Ferner bedeutet dies, dass aufgrund der höheren Einstellgenauigkeit kostengünstigere Aktuatoren, die bereits geringeren Stellgenauigkeitsanforderungen genügen, einsetzbar sind.

Um die Relativverstellung des Stellglieds gegenüber der Eingangswelle oder der Ausgangswelle rückgängig zu machen, werden die dritten Funktionselemente der Planetengetriebe, beispielsweise die Hohlräder, in einer Ausgestaltung der Erfindung durch den Aktuator in ihre Ausgangsstellung/Nullstellung zurück gedreht. Bevorzugt weist die erfindungsgemäße Servolenkbaugruppe dritte Funktionselemente auf, die jeweils unbegrenzt drehbar sind. Bei dieser vorteilhaften Ausgestaltung ist ein Zurückstellen der Relativverstellung des Stellglieds gegenüber der Eingangswelle oder der Ausgangswelle auch ohne Zurückdrehen der dritten Funktionselemente möglich. Hierzu muss der Aktuator lediglich die dritten Funktionselemente der Planetengetriebe in dieselbe Richtung wie zur Einstellung eines Differenzwinkels weiterdrehen, um erneut eine für die Nullstellung erforderliche Relativverstellung des Stellglieds gegenüber der Eingangswelle oder der Ausgangswelle zu erreichen. Diese Ausführungsform eignet sich besonders für den Einsatz kostengünstiger Aktuatoren. Darüber hinaus bietet diese Ausführungsform den Vorteil einer nahezu spielfreien Verstellung des Stellglieds, da sowohl der Aktuator als auch die Planetengetriebe lediglich in eine Richtung gedreht werden. Alternativ kann ein spielfreies Planetengetriebe auch durch Vorspannen der dritten Funktionselemente, beispielsweise der Hohlräder, erreicht werden. Aus Sicherheitsgründen kann es wünschenswert sein, den Drehwinkel der ersten oder dritten Funktionselemente, beispielsweise der Sonnenräder oder der Hohlräder, zu beschränken. Hierzu kann beispielsweise im Bereich dieser Funktionselemente der Planetengetriebe wenigstens ein Endanschlag vorgesehen sein, der den Drehwinkel dieser Funktionselemente und somit die Drehbarkeit des Planetengetriebes begrenzt.

Vorzugsweise steht der Aktuator in Dreheingriff mit den Planetengetrieben. Unter Dreheingriff ist hierbei sowohl eine reibschlüssige als auch eine formschlüssige Art der Übertragung einer Drehbewegung von einem Drehelement des Aktuators auf ein Drehelement eines Getriebes zu verstehen. Diese Ausführungsform bietet insbesondere den Vorteil, dass die Drehbewegung des Aktuators für die Übertragung auf die Getriebe nicht in eine Linearbewegung umgewandelt werden muss, was zu einer besonders kompakten und platzsparenden Anordnung des Verstellmechanismus einschließlich der Aktuatorik führt. Darüber hinaus ermöglicht die Drehbewegung des Aktuators eine einfache und wartungsfreundliche Abdichtung zwischen Aktuator und Getriebe.

In einer weiteren, besonders vorteilhaften Ausgestaltung steht der Aktuator über zwei Antriebsräder oder ein mehrteiliges Antriebsrad in Eingriff mit den Planetengetrieben. Besonders bevorzugt steht der Aktuator jedoch über ein einziges Antriebsrad in Eingriff mit den Planetengetrieben. Somit ist die gleichsinnige und gleichzeitig relative Verdrehung der dritten Funktionselemente der Planetengetriebe, beispielsweise der Hohlräder, zueinander mittels eines einzigen Aktuators möglich. Dies bietet insbesondere den Vorteil einer einfachen und platzsparenden Anordnung des Aktuators sowie eine nahezu spielfreie Relativverstellung des Stellglieds, da die beiden dritten Funktionselemente lediglich durch einen einzigen Aktuator verdreht werden. Ein möglicherweise vorhandenes Spiel wird von dem einen Aktuator jeweils zu gleichen Teilen auf die dritten Funktionselemente übertragen, durch Bildung des Differenzwinkels eliminiert und wirkt sich folglich nicht auf die Relativverstellung des Stellglieds aus.

In einer noch weiteren, bevorzugten Ausführungsform ist das Antriebsrad ein zweistufiges Ritzel und die dritten Funktionselemente, beispielsweise die Hohlräder, weisen jeweils unterschiedliche Außenverzahnungen auf. Dies ermöglicht die Ausgestaltung eines insbesondere wartungsfreundlichen, formschlüssigen Dreheingriffs zwischen dem Aktuator und den dritten Funktionselementen der Planetengetriebe. Durch eine geeignete Wahl der Außenverzahnungen der dritten Funktionselemente und der Verzahnungen des zweistufigen Ritzels lassen sich in einfacher Weise zwei unterschiedliche Übersetzungsverhältnisse, die jeweils von dem einen Aktuator auf ein Planetengetriebe wirken, festlegen. Dadurch lässt sich der Differenzwinkel bei gleichem absolutem Winkel weiter reduzieren.

Vorzugsweise ist bei der erfindungsgemäßen Servolenkbaugruppe zur Abdichtung zwischen Aktuator und Planetengetriebe ein Wellendichtring, ein O-Ring oder dergleichen vorgesehen. Dieser stellt eine besonders einfache, kostengünstige und wartungsfreundliche Maßnahme zur Abdichtung dar.

Bevorzugt ist der Aktuator der erfindungsgemäßen Servolenkbaugruppe ein Schrittmotor. Dies ermöglicht das Verdrehen der Planetengetriebe mit vorherbestimmten, konstanten Schrittwinkeln, was stets zu einem definierten Verdrehwinkel der Planetengetriebe führt. Schrittmotoren sind abhängig von ihrer möglichen kleinsten Schrittweite besonders kostengünstig verfügbar. Die für den erfindungsgemäßen Gegenstand erforderliche Minimalschrittweite ermöglicht den Einsatz besonders preiswerter Aktuatoren. Darüber hinaus kann der Aktuator beispielsweise auch ein Servomotor oder Hydraulikmotor sein.

Das erfindungsgemäße Verfahren zur Lenkunterstützung einer hydraulischen Servolenkung, wie sie insbesondere in Kraftfahrzeugen eingesetzt wird, weist die folgenden Schritte auf:
- Steuern der Lenkunterstützung in Abhängigkeit der Relativverdrehung einer Eingangswelle gegenüber einer Ausgangswelle mittels wenigstens eines hydraulischen Servoventils, das ein Stellglied aufweist,
- Übertragen der Drehbewegung der Eingangswelle oder der Ausgangswelle auf das Stellglied mittels wenigstens zweier Planetengetriebe, von denen jeweils ein erstes Funktionselement des einen Planetengetriebes mit der Eingangswelle oder der Ausgangswelle und ein erstes Funktionselement des anderen Planetengetriebes mit dem Stellglied drehfest verbunden ist und jeweils ein zweites Funktionselement zur Kopplung der Planetengetriebe vorgesehen ist, und
- Relativverstellen des Stellglieds gegenüber der Eingangswelle oder der Ausgangswelle mittels wenigstens eines Aktuators, um die Lenkunterstützungscharakteristik zu beeinflussen.

Die vorstehende Schrittreihenfolge ist nicht als Ausführungssequenz der Schritte zu verstehen, um zum erfindungsgemäßen Verfahren zu gelangen. Vielmehr können die Verfahrensschritte in beliebiger Reihenfolge, insbesondere auch zeitgleich und intermittierend, ausgeführt werden.

Erfindungsgemäß werden die beiden dritten Funktionselemente zur Relativverstellung des Stellglieds durch den Aktuator jeweils gleichsinnig und gleichzeitig relativ zueinander verdreht. Zur Bestimmung des Begriffs "Funktionselement" sei auf die obige Beschreibung der erfindungsgemäßen Servolenkbaugruppe verwiesen.

Das gleichsinnige Verdrehen und gleichzeitige Verdrehen der beiden dritten Funktionselemente der Planetengetriebe, beispielsweise der Hohlräder, relativ zueinander zum Einstellen eines relativ kleinen Differenzwinkels zwischen diesen dritten Funktionselementen führt im Vergleich zum Stand der Technik dazu, dass mit einem betragsmäßig großen absoluten Drehwinkel, den jedes dritte Funktionselement zurücklegt und der vom Aktuator bewirkt wird, wenigstens die gleiche Relativverstellung, insbesondere der gleiche Relativwinkel, zwischen Stellglied und Eingangswelle oder Ausgangswelle wie im Stand der Technik eingestellt wird. Auf diese Weise erhöht die erfindungsgemäße Vorrichtung die Einstellgenauigkeit der Relativverstellung zwischen Stellglied und Eingangswelle oder Ausgangswelle. Ferner bedeutet dies, dass aufgrund der hohen Einstellgenauigkeit kostengünstigere Aktuatoren, die bereits geringeren Stellgenauigkeitsanforderungen genügen, einsetzbar sind.

Bevorzugt werden bei dem erfindungsgemäßen Verfahren die dritten Funktionselemente, beispielsweise die Hohlräder, unbegrenzt gedreht. Bei dieser vorteilhaften Ausgestaltung ist ein Zurückstellen der Relativverstellung des Stellglieds gegenüber der Eingangswelle oder der Ausgangswelle ohne Zurückdrehen der dritten Funktionselemente möglich. Hierzu dreht der Aktuator lediglich die dritten Funktionselemente der Planetengetriebe in dieselbe Richtung wie zur Einstellung eines Differenzwinkels weiter, um erneut eine für die erneute Nullstellung erforderliche Relativverstellung des Stellglieds gegenüber der Eingangswelle oder der Ausgangswelle zu erreichen. Diese Ausführungsform eignet sich bevorzugt für den Einsatz kostengünstiger Aktuatoren. Darüber hinaus bietet diese Ausgestaltungsform den Vorteil einer nahezu spielfreien Verstellung des Stellglieds, da sowohl der Aktuator' als auch die Planetengetriebe lediglich in eine Richtung gedreht werden.

Aus Sicherheitsgründen kann es wünschenswert sein, dass das Verdrehen der ersten oder dritten Funktionselemente, beispielsweise der Sonnenräder oder der Hohlräder, begrenzt wird.

Vorzugsweise werden die Planetengetriebe bei dem erfindungsgemäßen Verfahren durch den Aktuator unter Dreheingriff gedreht. Zur Definition des Begriffs "Dreheingriff" sei wiederum auf die obige Beschreibung der erfindungsgemäßen Servolenkbaugruppe verwiesen. Diese Ausführungsform bietet insbesondere den Vorteil, dass die Drehbewegung des Aktuators für die Übertragung auf die Getriebe nicht in eine Linearbewegung umgewandelt werden muss, was zu einer besonders kompakten und platzsparenden Anordnung des Verstellmechanismus einschließlich der Aktuatorik führt. Ferner ermöglicht die Drehbewegung des Aktuators eine einfache und wartungsfreundliche Abdichtung zwischen Aktuator und Getriebe.

In einer weiteren, besonders vorteilhaften Ausführungsform werden die beiden dritten Funktionselemente, beispielsweise die Hohlräder, bei dem erfindungsgemäßen Verfahren durch den Aktuator mittels eines einzigen Antriebsrads gedreht, das mit den dritten Funktionselementen in Dreheingriff steht. Somit ist die gleichsinnige Verdrehung und gleichzeitige Relativverdrehung der dritten Funktionselemente der Planetengetriebe zueinander mittels eines einzigen Aktuators möglich. Dies bietet insbesondere den Vorteil einer einfachen und platzsparenden Anordnung des Aktuators sowie eine nahezu spielfreie Relativverstellung des Stellglieds, da die beiden dritten Funktionselemente lediglich durch einen einzigen Aktuator verdreht werden. Ein möglicherweise vorhandenes Spiel wird von dem einen Aktuator jeweils zu gleichen Teilen auf die dritten Funktionselemente übertragen, durch Bildung des Differenzwinkels eliminiert und wirkt sich folglich nicht auf die Relativverstellung des Stellglieds aus.

In einer noch weiteren, besonders vorteilhaften Ausführungsform des erfindungsgemäßen Verfahrens werden die beiden dritten Funktionselemente, beispielsweise die Hohlräder, die jeweils eine unterschiedliche Außenverzahnung aufweisen, durch den Aktuator mittels eines zweistufigen Ritzels gedreht. Dies ermöglicht die Ausgestaltung eines insbesondere wartungsfreundlichen, formschlüssigen Dreheingriffs zwischen dem Aktuator und den dritten Funktionselementen der Planetengetriebe. Durch eine geeignete Wahl der Außenverzahnungen der dritten Funktionselemente und der Verzahnungen des zweistufigen Ritzels lassen sich in einfacher Weise zwei unterschiedliche Übersetzungsverhältnisse, die jeweils von dem einen Aktuator auf ein Planetengetriebe wirken, festlegen.

Weitere Merkmale und Vorteile der Erfindung ergeben sich aus den übrigen Ansprüchen sowie der folgenden Beschreibung nicht einschränkend zu verstehender Ausführungsbeispiele der Erfindung, die im Folgenden unter Bezugnahme auf die Zeichnung näher erläutert wird. In dieser Zeichnung zeigen:
- Figur 1:: eine Schnittansicht entlang der Längsachse einer Ausführungsform der erfindungsgemäßen Servolenkbaugruppe,
- Figur 2:: einen vergrößerten Ausschnitt der Schnittansicht aus Figur 1 und
- Figur 3:: eine schematische Draufsicht auf ein Planetengetriebe der erfindungsgemäßen Servolenkbaugruppe.

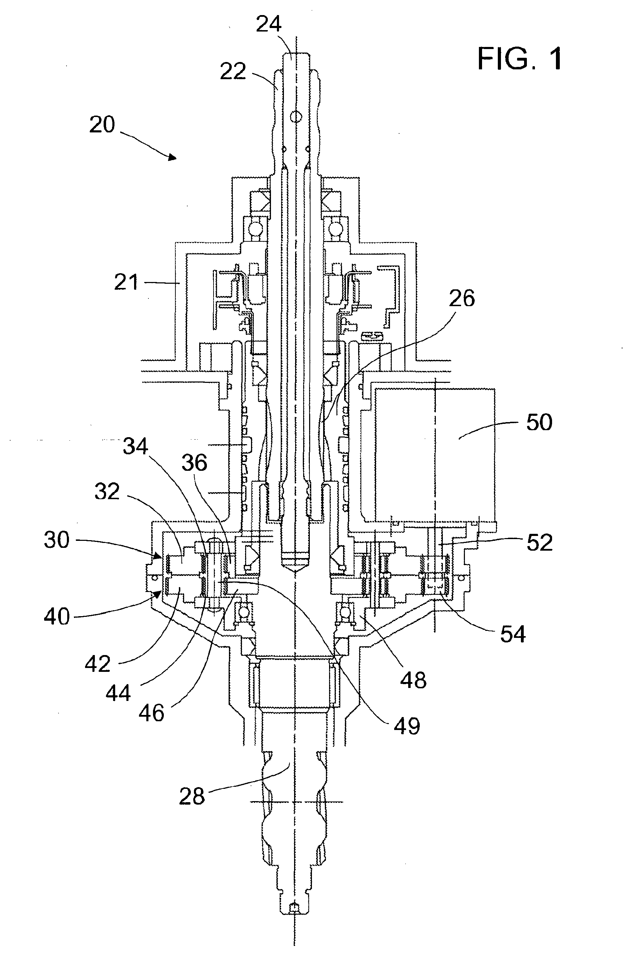

Die in den Figuren 1 bis 3 dargestellte und im Folgenden erläuterte erfindungsgemäße Servolenkbaugruppe stellt lediglich eine Bauform dar, bei der die Drehbewegung der Ausgangswelle auf das Stellglied übertragen wird. Hierbei ist ein Planetengetriebe dem Stellglied und das zweite Planetengetriebe der Ausgangswelle zugeordnet. Eine andere mögliche Bauform der erfindungsgemäßen Servolenkbaugruppe ist, die Drehbewegung der Eingangswelle auf das Stellglied zu übertragen, wobei dann ein Planetengetriebe der Eingangswelle und das zweite Planetengetriebe dem Stellglied zugeordnet ist.

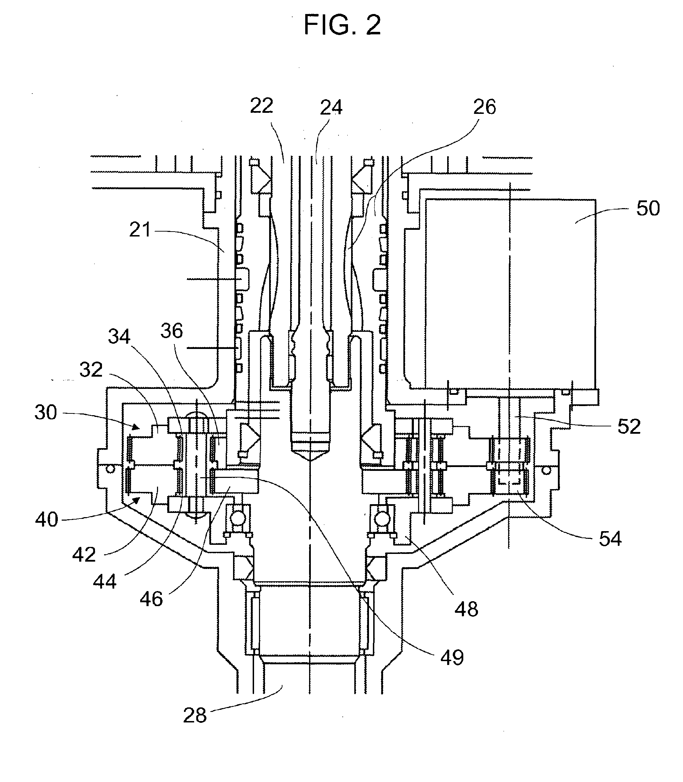

Figur 1 und Figur 2 zeigen eine Ausführungsform einer erfindungsgemäßen Servolenkbaugruppe 20 in einer Schnittansicht entlang der Längsachse. Die dargestellte Servolenkbaugruppe 20 umfasst im Wesentlichen ein hydraulisches Servoventil, zwei Planetengetriebe 30 und 40 und einen Aktuator 50.

Das Servoventil weist im Wesentlichen eine Eingangswelle 22, eine Ausgangswelle 28 und ein Stellglied 26 auf. Die Eingangswelle 22 ist über eine nicht gezeigte Lenksäule mit einem Lenkrad verbunden. Die Ausgangswelle 28 ist wiederum mittelbar mit zu drehenden, nicht dargestellten Rädern verbunden. Die Eingangswelle 22 ist über einen Torsionsstab 24, der größtenteils von der Eingangswelle 22 umgeben ist, mit der Ausgangswelle 28 verbunden, wobei der Torsionsstab 24 an seinem einen Ende drehfest mit der Eingangswelle 22 und an seinem anderen Ende drehfest mit der Ausgangswelle 28 verbunden ist. Ferner ist konzentrisch zur Eingangswelle 22 und um diese herum ein Stellglied 26 angeordnet. Das Stellglied 26 ist relativ zu der Eingangswelle 22 dreh- und/oder verschiebbar gelagert.

Das Servoventil ist von einem Gehäuse 21 umgeben. In dem Gehäuse 21 sind ein erstes Planetengetriebe 30 und ein zweites Planetengetriebe 40 angeordnet. Jedes Planetengetriebe 30, 40 umfasst im Wesentlichen ein Sonnenrad 36, 46, mehrere Planetenräder 34, 44 und ein Hohlrad 32, 42. Das erste Planetengetriebe 30 ist dem Stellglied 26 und das zweite Planetengetriebe 40 der Ausgangswelle 28 zugeordnet, wobei die Sonnenräder 36, 44 jeweils drehfest mit dem Stellglied 26 bzw. der Ausgangswelle 28 verbunden sind. Die Hohlräder 32, 42 der beiden Planetengetriebe 30, 40 sind voneinander unabhängig drehbar gelagert. Die Kopplung der zwei Planetengetriebe 30, 40 wird durch einen gemeinsamen Planetenträger 48 erzielt, welcher die Planetenräder 34, 44 der zwei Getriebe 30, 40 jeweils auf gemeinsamen Wellen 49 trägt. Die Planetenräder 34, 44 sind hierbei unabhängig voneinander auf den Wellen 49 drehbar gelagert.

Die Hohlräder 32, 42 der zwei Planetengetriebe 30, 40 weisen jeweils eine Außenverzahnung sowie eine Innenverzahnung auf. Insbesondere weisen die Hohlräder 32, 42 unterschiedliche Außenverzahnungen auf, wobei die Anzahl der Zähne des Hohlrads 42 allgemein kleiner ist als die Anzahl der Zähne des Hohlrads 32. Das Hohlrad 32 des ersten Planetengetriebes 30 weist bevorzugt eine Außenverzahnung von 130 bis 190 Zähnen auf und bevorzugter 150 bis 170 Zähne. Das Hohlrad 42 des zweiten Planetengetriebes 40 weist eine Außenverzahnung auf, die bevorzugt 1 bis 10 Zähne und besonders bevorzugt 1 bis 4 Zähne weniger aufweist als die Außenverzahnung des Hohlrads 32. Eine für die erfindungsgemäße Servolenkbaugruppe besonders geeignete Abstimmung der Planetengetriebe 30, 40 aufeinander hat sich beispielsweise gezeigt, wenn das Hohlrad 32 eine Außenverzahnung von 170 Zähnen und das Hohlrad 42 eine Außenverzahnung von 169 Zähnen aufweist oder wenn das Hohlrad 32 eine Außenverzahnung von 150 Zähnen und das Hohlrad 42 eine Außenverzahnung von 149 Zähnen aufweist.

Mit der Außenverzahnung der beiden Hohlräder 32, 42 steht ein zweistufiges Ritzel 54 in Dreheingriff. Das zweistufige Ritzel 54 weist ebenfalls zwei unterschiedliche Verzahnungen auf. Als besonders vorteilhaft für den Antrieb der Hohlräder 32, 42 haben sich beispielsweise zweistufige Ritzel mit 18 und 17 Zähnen, 17 und 16 Zähnen oder 16 und 15 Zähnen herausgestellt. Das Ritzel 54 ist drehfest mit einer Antriebswelle 52 eines Aktuators 50 verbunden.

Wie in Figur 1 und Figur 2 zu sehen ist, ist der Aktuator 50 außerhalb des Gehäuses 21 angeordnet. In dem hier beschriebenen Ausführungsbeispiel ist der Aktuator 50 ein Elektromotor. Insbesondere ist der Aktuator 50 ein Schrittmotor mit einer bevorzugten Schrittweite aus dem Bereich von 0,1 Grad bis 10 Grad, insbesondere 0,5 Grad bis 5 Grad, und besonders bevorzugt 0,9 Grad. Der Aktuator 50 treibt das zweistufige Ritzel 54 über die Antriebswelle 52 direkt an. An der Stelle, an der der Aktuator 50 an dem Gehäuse 21 angebracht ist, weist das Gehäuse 21 eine Öffnung auf, durch die die Antriebswelle 52 samt Ritzel 54 zu Montagezwecken geführt werden kann. Die Abdichtung zwischen Aktuator 50 und den Planetengetrieben 30, 40 erfolgt durch einen in den Figuren 1 und 2 nicht dargestellten Wellendichtring, Q-Ring oder dergleichen. Der gemeinsame Planetenträger 48 der beiden Planetengetriebe 30, 40 ist drehbar mittels entsprechender Lager an der Ausgangswelle 28 gelagert.

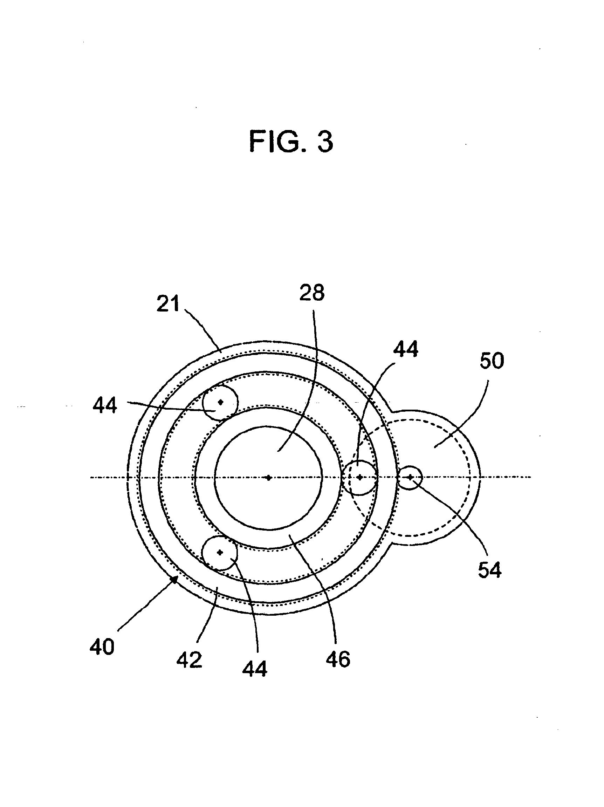

Figur 3 stellt eine schematische Draufsicht auf ein Planetengetriebe der erfindungsgemäßen Servolenkbaugruppe 20 dar. In Figur 3 ist ein zweites Planetengetriebe 40 dargestellt, welches ein Hohlrad 42, drei Planetenräder 44 und ein Sonnenrad 46 umfasst. Das Sonnenrad 46 ist drehfest mit einer Ausgangswelle 28 verbunden. Ein Ritzel 54 steht in Dreheingriff mit der Außenverzahnung des Hohlrads 42 und wird unmittelbar durch einen Aktuator 50 angetrieben.

Die beiden Sonnenräder 36, 46 der Planetengetriebe 30, 40 weisen bevorzugt jeweils einen Durchmesser im Bereich von 40 bis 60 mm auf, bevorzugter 45 bis 55 mm und besonders bevorzugt 45 mm auf. Die Sonnenräder 36, 46 weisen bevorzugt 80 bis 110 Zähne und bevorzugter 85 bis 100 Zähne und besonders bevorzugt 90 Zähne auf. Die Planetenräder 34, 44 der Planetengetriebe 30, 40 weisen bevorzugt jeweils einen Durchmesser von 5 bis 15 mm, bevorzugter 8 bis 12 mm und besonders bevorzugt 10 mm auf. Die Planetenräder 34, 44 weisen bevorzugt jeweils 10 bis 30 Zähne, bevorzugter 15 bis 25 Zähne und besonders bevorzugt 20 Zähne auf. Die Hohlräder 32, 42 der Planetengetriebe 30, 40 weisen bevorzugt jeweils einen Innendurchmesser von 50 bis 80 mm, bevorzugter 60 bis 70 mm und besonders bevorzugt 65 mm auf. Die Hohlräder 32, 42 weisen bevorzugt jeweils 110 bis 150 Zähne, bevorzugter 120 bis 140 Zähne und besonders bevorzugt 130 Zähne auf.

Das Hohlrad 32 des ersten Getriebes 30 weist bevorzugt einen Außendurchmesser von 60 bis 90 mm, bevorzugter 70 bis 80 mm und besonders bevorzugt 75 mm auf. Das Hohlrad 32 des ersten Getriebes 30 weist bevorzugt eine Zähnezahl von 120 bis 180 Zähne, bevorzugter 140 bis 160 Zähne und besonders bevorzugt 150 Zähne auf. Das Hohlrad 42 des zweiten Planetengetriebes 40 weist bevorzugt eine Zähnezahl auf, die 1 Zahn kleiner ist als die Zähnezahl des Hohlrads 32.

Der Bereich des Ritzels 54, der mit dem Hohlrad des ersten Planetengetriebes 30 in Eingriff steht, weist bevorzugt einen Durchmesser von 6 bis 9 mm, bevorzugter 7 bis 8 mm und besonders bevorzugt 7,5 mm auf. Der Bereich des Ritzels 54, der mit dem Hohlrad 42 des zweiten Planetengetriebes 40 in Eingriff steht, weist bevorzugt eine Zähnezahl auf, die so gewählt ist, dass der Achsabstand der beiden Paarungen Ritzel 54/Planetengetriebe 30 und Ritzel 54/Planetengetriebe 40 gleich ist.

In einer weiteren, nicht dargestellten Ausführungsvariante der erfindungsgemäßen Servolenkbaugruppe weisen die Sonnenräder der zwei Planetengetriebe jeweils 98 Zähne auf. Die Planetenräder der beiden Planetengetriebe weisen jeweils 16 Zähne auf. Beide Hohlräder der Planetengetriebe weisen eine Innenverzahnung von jeweils 130 Zähnen auf. Die Außenverzahnung des Hohlrads des ersten Planetengetriebes weist 169 Zähne auf. Die Außenverzahnung des Hohlrads des zweiten Planetengetriebes weist 170 Zähne auf. Das zweistufige Ritzel weist in dem Bereich, der mit der Außenverzahnung des Hohlrads des ersten Planetengetriebes in Eingriff steht, 18 Zähne auf und in dem Bereich, der mit der Außenverzahnung des Hohlrads des zweiten Planetengetriebes in Eingriff steht, 17 Zähne auf.

Nachfolgend wird nun die Funktionsweise des Verstellmechanismus der erfindungsgemäßen Servolenkbaugruppe erläutert.

Wenn der Aktuator 50 das zweistufige Ritzel 54 dreht, werden die beiden Hohlräder 32, 42 der Planetengetriebe 30, 40 aufgrund des Dreheingriffs mit dem Ritzel 54 ebenfalls in Drehung versetzt. Da die beiden Hohlräder 32, 42 unterschiedliche Außenverzahnungen aufweisen, stellt sich bei der Drehung ein Differenzwinkel zwischen den Hohlrädern 32, 42 ein. Dieser Differenzwinkel wird durch die Übersetzung der Planetengetriebe 30, 40 leicht verstärkt auf eine Relativverstellung, insbesondere einen Relativwinkel, zwischen Stellglied 26 und Ausgangswelle 28 übertragen. Wenn keine Relativverstellung zwischen dem Stellglied 26 und der Ausgangswelle 28 eingestellt werden soll, werden die zwei Hohlräder 32, 42 über das zweistufige Ritzel 54 in Position gehalten.

Wird die Eingangswelle 22 gedreht, überträgt sich das Drehmoment über den Torsionsstab 24 auf die Ausgangswelle 28. Durch die Drehmomentübertragung des Torsionsstabs 24 erfolgt eine Verdrehung desselben und damit der Eingangswelle 22 gegenüber der Ausgangswelle 28. Eine Lenkbewegung bzw. Rotation der Ausgangswelle 28 führt nun zu einer Rotation des Sonnenrads 46, das drehfest mit der Ausgangswelle 28 verbunden ist. Da das demselben Planetengetriebe 40 zugeordnete Hohlrad 42 an seiner Außenverzahnung durch das Ritzel 54 festgehalten wird, müssen sich die Planetenräder 44 zwischen dem Sonnenrad 46 und dem Hohlrad 42 abwälzen. Dieser Vorgang verursacht eine Rotation des gemeinsamen Planetenträgers 48. Durch die Rotation des Planetenträgers 48 und das Festhalten der Hohlräder 32, 42 beider Planetengetriebe 30, 40 müssen sich die Planetenräder 34 des dem Stellglied 26 zugeordneten Planetengetriebes 30 an dessen Hohlrad 32 abwälzen. Die Rotation dieser Planetenräder 34 bewirkt somit eine Drehung des Sonnenrads 36, das drehfest mit dem Stellglied 26 verbunden ist. Bedingt durch die identischen Übersetzungen der zwei Planetengetriebe 30, 40 wird das dem Stellglied 26 zugeordnete Sonnenrad 36 um denselben Winkel gedreht wie das der Ausgangswelle 28 zugeordnete Sonnenrad 46. Somit folgt das Stellglied 26 der Drehung der Ausgangswelle 28.

Wenn nun ein Differenzwinkel eingestellt werden soll, wird das zweistufige Ritzel 54 durch den Aktuator 50 verdreht. Dies verursacht einen Differenzwinkel zwischen den beiden Hohlrädern 32, 42 der Planetengetriebe 30, 40. Dieser Differenzwinkel wird verstärkt mit der Planetengetriebeübersetzung auf eine Relativverstellung, insbesondere einen Relativwinkel, zwischen Stellglied 26 und Ausgangswelle 28 übertragen.

Eine erste Auslegung des Verstellmechanismus hat gezeigt, dass eine Drehung des zweistufigen Ritzels 54 um +/- 230 bis 250 Grad, insbesondere 245 Grad, einen Relativwinkel der Sonnenräder 36, 46 von +/- 2 bis 3 Grad, insbesondere 2,5 Grad, erzielt. Dies führt zu einer Relativverstellung zwischen Stellglied 26 und Ausgangswelle 28 von 3 bis 4 Grad, insbesondere 3,5 Grad. Die Hohlräder 32, 42 bewegen sich bei dieser Auslegung um +/- 40 bis 50 Grad, insbesondere 45 Grad, was eine einfache Rückstellung ermöglicht. Falls keine Rückstellung durch Zurückdrehen der Hohlräder 32, 42 erfolgt, muss das zweistufige Ritzel 54 um bevorzugt +/- 2 bis 12 Umdrehungen, bevorzugter 3,5 bis 7 Umdrehungen, gedreht werden, um den für eine Nullstellung erforderlichen Relativwinkel der Sonnenräder 36, 46 erneut einzustellen.

Die vorliegende Erfindung ist selbstverständlich nicht auf die vorstehend beschriebenen Ausführungsbeispiele beschränkt. So könnte die erfindungsgemäße Servolenkbaugruppe beispielsweise auch mit mehr als einem Aktuator ausgestattet sein, wobei beispielsweise jeweils ein Aktuator ein Planetengetriebe antreibt.

Darüber hinaus könnte der Aktuator auch aus einem Servomotor oder einem Hydraulikmotor gebildet sein, allgemein aus jeder geeigneten Art von Motor, mit dem sich der Antrieb der Planetengetriebe im Sinn der Erfindung verwirklichen lässt.

Die Anzahl der Planetenräder der in dem Ausführungsbeispiel beschriebenen Planetengetriebe ist selbstverständlich nicht auf die in Figur 3 gezeigten drei Planetenräder beschränkt. Der Fachmann wird beispielsweise bei Berücksichtigung des von einem Planetengetriebe zu übertragenden Drehmoments eine erforderliche und geeignete Anzahl Planetenräder vorsehen, zum Beispiel auch vier oder mehr.

Außerdem ist ebenso die Verwendung von zwei Planetengetrieben denkbar, die nicht dieselbe Übersetzung aufweisen, so dass die Drehung der Ausgangswelle mit einem anderen Übersetzungsverhältnis auf das Stellglied übertragen wird. Auf diese Weise wäre eine Selbstzentrierung der Lenkung möglich.

Darüber hinaus ist auch die Verwendung weiterer Zwischengetriebe zusätzlich zu den in den Ausführungsbeispielen beschriebenen zwei Planetengetrieben vorstellbar, um die Übersetzung weiter zu verändern.

## Patentansprüche

1. Servolenkbaugruppe (20) für eine hydraulische Servolenkung von Kraftfahrzeugen, umfassend:
- wenigstens ein hydraulisches Servoventil mit einem Stellglied (26) zur Steuerung der Lenkunterstützung in Abhängigkeit der Relativverdrehung einer Eingangswelle (22) gegenüber einer Ausgangswelle (28),
- wenigstens zwei Planetengetriebe (30, 40) zur Übertragung der Drehbewegung der Eingangswelle (22) oder der Ausgangswelle (28) auf das Stellglied (26), wobei jeweils ein erstes Funktionselement des einen Planetengetriebes (40) mit der Eingangswelle (22) oder der Ausgangswelle (28) und ein erstes Funktionselement des anderen Planetengetriebes (30) mit dem Stellglied (26) drehfest verbunden ist und jeweils ein zweites Funktionselement zur Kopplung der Planetengetriebe (30, 40) vorgesehen ist, und
- wenigstens einen Aktuator (50) zur Relativverstellung des Stellglieds (26) gegenüber der Eingangswelle (22) oder der Ausgangswelle (28), um die Lenkunterstützungscharakteristik zu beeinflussen,
**dadurch gekennzeichnet, dass** der wenigstens eine Aktuator (50) eine gleichsinnige Verdrehung unter gleichzeitiger Relativverdrehung der beiden jeweils dritten Funktionselemente der Planetengetriebe (30, 40) zueinander bewirkt.

2. Servolenkbaugruppe nach Anspruch 1, **dadurch gekennzeichnet, dass** der Aktuator (50) in Dreheingriff mit den dritten Funktionselementen der Planetengetriebe (30, 40) steht.

3. Servolenkbaugruppe nach Anspruch 2, **dadurch gekennzeichnet, dass** der Aktuator (50) über ein einziges Antriebsrad in Dreheingriff mit den dritten Funktionselementen der Planetengetriebe (30, 40) steht.

4. Servolenkbaugruppe nach Anspruch 3, **dadurch gekennzeichnet, dass** das Antriebsrad ein zweistufiges Ritzel (54) ist und die dritten Funktionselemente jeweils eine unterschiedliche Außenverzahnung aufweisen.

5. Servolenkbaugruppe nach einem der Ansprüche 2 bis 4, **dadurch gekennzeichnet, dass** zur Abdichtung zwischen Aktuator (50) und Planetengetriebe (30, 40) ein Wellendichtring oder ein Q-Ring vorgesehen ist.

6. Servolenkbaugruppe nach einem der vorhergehenden Ansprüche, **dadurch gekennzeichnet, dass** der Aktuator (50) ein Schrittmotor oder ein Servomotor ist.

7. Servolenkbaugruppe nach einem der vorhergehenden Ansprüche, **dadurch gekennzeichnet, dass** die dritten Funktionselemente jeweils unbegrenzt drehbar sind.

8. Servolenkbaugruppe nach einem der vorhergehenden Ansprüche, **dadurch gekennzeichnet, dass** das erste Funktionselement ein Sonnenrad (36, 46), das zweite Funktionselement ein oder mehrere Planetenräder (34, 44) und das dritte Funktionselement ein Hohlrad (32, 42) ist.

9. Verfahren zur Lenkunterstützung einer hydraulischen Servolenkung von Kraftfahrzeugen mit den folgenden Schritten:
- Steuern der Lenkunterstützung in Abhängigkeit der Relativverdrehung einer Eingangswelle (22) gegenüber einer Ausgangswelle (28) mittels wenigstens eines hydraulischen Servoventils, das ein Stellglied (26) aufweist,
- Übertragen der Drehbewegung der Eingangswelle (22) oder der Ausgangswelle (28) auf das Stellglied (26) mittels wenigstens zweier Planetengetriebe (30, 40), von denen jeweils ein erstes Funktionselement des einen Planetengetriebes (40) mit der Eingangswelle (22) oder der Ausgangswelle (28) und ein erstes Funktionselement des anderen Planetengetriebes (30) mit dem Stellglied (26) drehfest verbunden ist und jeweils ein zweites Funktionselement zur Kopplung der Planetengetriebe (30, 40) vorgesehen ist, und
- Relativverstellen des Stellglieds (26) gegenüber der Eingangswelle (22) oder der Ausgangswelle (28) mittels wenigstens eines Aktuators (50), um die Lenkunterstützungscharakteristik zu beeinflussen,
**dadurch gekennzeichnet, dass** zur Relativverstellung des Stellglieds (26) die beiden dritten Funktionselemente durch den Aktuator (50) jeweils gleichsinnig und gleichzeitig relativ zueinander verdreht werden.

10. Verfahren nach Anspruch 9, **dadurch gekennzeichnet, dass** die dritten Funktionselemente der Planetengetriebe (30, 40) durch den Aktuator (50) unter Dreheingriff gedreht werden.

11. Verfahren nach Anspruch 10, **dadurch gekennzeichnet, dass** die beiden dritten Funktionselemente der Planetengetriebe (30, 40) durch den Aktuator (50) mittels eines einzigen Antriebsrads, das mit den dritten Funktionselementen in Dreheingriff steht, gedreht werden.

12. Verfahren nach Anspruch 11, **dadurch gekennzeichnet, dass** die beiden dritten Funktionselemente, die jeweils eine unterschiedliche Außenverzahnung aufweisen, durch den Aktuator (50) mittels eines zweistufigen Ritzels (54) gedreht werden.

13. Verfahren nach einem der Ansprüche 9 bis 12, **dadurch gekennzeichnet, dass** die dritten Funktionselemente unbegrenzt gedreht werden

## Claims

1. Power steering assembly (20) for a hydraulic power steering system of motor vehicles, comprising
- at least one hydraulic servo valve with a control element (26) for controlling the steering support dependent upon the relative rotation of the input shaft (22) relative to an output shaft (28),
- at least two planetary gear trains (30, 40) for transmitting the rotary movement of the input shaft (22) or the output shaft (28) onto the control element (26) wherein a first functional element, respectively, of the one planetary gear train (40) is connected to the input shaft (22) or the output shaft (28), and a first functional element of the other planetary gear train (30) is non-rotatably connected to the control element (26), and a second functional element, respectively, is provided for coupling the planetary gear trains (30, 40), and
- at least one actuator (50) for the relative adjustment of the control element (26) relative to the input shaft (22) or the output shaft (28) in order to influence the steering support characteristic,
**characterised in that** the at least one actuator (50) causes an equidirectional rotation with simultaneous relative rotation of the two respective third functional elements of the planetary gear trains (30, 40) relative to one another.

2. Power steering assembly according to claim 1, **characterised in that** the actuator (50) is in rotational engagement with the third functional elements of the planetary gear trains (30, 40).

3. Power steering assembly according to claim 2, **characterised in that** the actuator (50) is in rotational engagement with the third functional elements of the planetary gear trains (30, 40) through a single drive gear.

4. Power steering assembly according to claim 3, **characterised in that** the drive gear is a two-stage pinion (54) and the third functional elements each have a different external toothing.

5. Power steering assembly according to any one of the claims 2 to 4, **characterised in that** a shaft-sealing ring or an O-ring is provided for sealing between the actuator (50) and the planetary gear train (30, 40).

6. Power steering assembly according to any one of the preceding claims, **characterised in that** the actuator (50) is a stepper motor or a servo motor.

7. Power steering assembly according to any one of the preceding claims, **characterised in that** the third functional elements are each rotatable without limitation.

8. Power steering assembly according to any one of the preceding claims, **characterised in that** the first functional element is a sun gear (36, 46), the second functional element is one or more planet gears (34, 44) and the third planet gear is a ring gear (32, 42).

9. Method for steering support of a hydraulic power steering system of motor vehicles, comprising the following steps:
- controlling the steering support dependent upon the relative rotation of an input shaft (22) relative to an output shaft (28) by means of at least one hydraulic servo valve comprising a control element (26),
- transmitting the rotary movement of the input shaft (22) or of the output shaft (28) onto the control element (26) by means of at least two planetary gear trains (30, 40), of which, respectively, a first functional element of the one planetary gear train (40) is connected to the input shaft (22) or the output shaft (28), and a first functional element of the other planetary gear train (30) is non-rotatably connected to the control element (26), and a second functional element, respectively, is provided for coupling the planetary gear trains (30, 40), and
- relative adjustment of the control element (26) relative to the input shaft (22) or the output shaft (28) by means of at least one actuator (50) in order to influence the steering support characteristic,
**characterised in that** the two third functional elements are each rotated equidirectionally and simultaneously relative to one another by the actuator (50) for the relative adjustment of the control element (26).

10. Method according to claim 9, **characterised in that** the third functional elements of the planetary gear trains (30, 40) are rotated by the actuator (50) while in rotational engagement.

11. Method according to claim 10, **characterised in that** the two third functional elements of the planetary gear trains (30, 40) are rotated by the actuator (50) by means of a single drive gear that is in rotational engagement with the third functional elements.

12. Method according to claim 11, **characterised in that** the two third functional elements, each of which has a different external toothing, are rotated by the actuator (50) by means of a two-stage pinion (54).

13. Method according to any one of the claims 9 to 12, **characterised in that** the third functional elements are rotated without limitation.

## Revendications

1. Ensemble de direction assistée (20) pour une direction assistée hydraulique de véhicules automobiles, comprenant :
- au moins une servovalve hydraulique ayant un élément de commande final (26) destiné à commander l'assistance de direction en fonction de la rotation relative d'un arbre d'entrée (22) par rapport à un arbre de sortie (28),
- au moins deux engrenages épicycloïdaux (30, 40) destinés à transmettre le mouvement rotatif de l'arbre d'entrée (22) ou de l'arbre de sortie (28) audit élément de commande final (26), respectivement un premier élément fonctionnel de l'un (40) des engrenages épicycloïdaux étant solidaire en rotation de l'arbre d'entrée (22) ou de l'arbre de sortie (28) et un premier élément fonctionnel de l'autre engrenage épicycloïdal (30) étant solidaire en rotation de l'élément de commande final (26), et respectivement un deuxième élément fonctionnel étant prévu pour coupler lesdits engrenages épicycloïdaux (30, 40), et
- au moins un actionneur (50) pour le réglage relatif dudit élément de commande final (26) par rapport à l'arbre d'entrée (22) ou à l'arbre de sortie (28) afin d'influencer la caractéristique d'assistance de direction,
**caractérisé par le fait que** ledit au moins un actionneur (50) provoque une rotation dans le même tout en ayant une rotation relative simultanée des deux éléments fonctionnels respectivement troisièmes des engrenages épicycloïdaux (30, 40) l'un par rapport à l'autre.

2. Ensemble de direction assistée selon la revendication 1, **caractérisé par le fait que** ledit actionneur (50) est en prise rotative avec lesdits troisièmes éléments fonctionnels des engrenages épicycloïdaux (30, 40).

3. Ensemble de direction assistée selon la revendication 2, **caractérisé par le fait que** ledit actionneur (50) est en prise rotative par une seule roue motrice avec lesdits troisièmes éléments fonctionnels des engrenages épicycloïdaux (30, 40).

4. Ensemble de direction assistée selon la revendication 3, **caractérisé par le fait que** ladite roue motrice est un pignon à deux étages (54) et que lesdits troisièmes éléments fonctionnels présentent chacun une denture extérieure différente.

5. Ensemble de direction assistée selon l'une quelconque des revendications 2 à 4, **caractérisé par le fait que**, pour l'étanchéité entre ledit actionneur (50) et l'engrenage épicycloïdal (30, 40), on prévoit une bague d'étanchéité d'arbre ou un joint torique.

6. Ensemble de direction assistée selon l'une quelconque des revendications précédentes, **caractérisé par le fait que** ledit actionneur (50) est un moteur pasà-pas ou un servomoteur.

7. Ensemble de direction assistée selon l'une quelconque des revendications précédentes, **caractérisé par le fait que** lesdits troisièmes éléments fonctionnels peuvent tourner chacun de façon illimitée.

8. Ensemble de direction assistée selon l'une quelconque des revendications précédentes, **caractérisé par le fait que** ledit premier élément fonctionnel est une roue solaire (36, 46), ledit deuxième élément fonctionnel est une ou plusieurs roue(s) satellite(s) (34, 44) et ledit troisième élément fonctionnel est une couronne (32, 42).

9. Procédé d'assistance de direction d'une direction assistée hydraulique de véhicules automobiles, comprenant les étapes suivantes :
- commander l'assistance de direction en fonction de la rotation relative d'un arbre d'entrée (22) par rapport à un arbre de sortie (28) au moyen d'au moins une servovalve hydraulique qui présente un élément de commande final (26),
- transmettre le mouvement rotatif de l'arbre d'entrée (22) ou de l'arbre de sortie (28) audit élément de commande final (26) au moyen d'au moins deux engrenages épicycloïdaux (30, 40) dont, respectivement, un premier élément fonctionnel de l'un (40) des engrenages épicycloïdaux est solidaire en rotation de l'arbre d'entrée (22) ou de l'arbre de sortie (28) et un premier élément fonctionnel de l'autre engrenage épicycloïdal (30) est solidaire en rotation de l'élément de commande final (26), et respectivement un deuxième élément fonctionnel est prévu pour coupler lesdits engrenages épicycloïdaux (30, 40), et
- régler de manière relative ledit élément de commande final (26) par rapport à l'arbre d'entrée (22) ou à l'arbre de sortie (28) au moyen d'au moins un actionneur (50) afin d'influencer la caractéristique d'assistance de direction,
**caractérisé par le fait que**, pour le réglage relatif dudit élément de commande final (26), les deux troisièmes éléments fonctionnels sont tournés chacun, par ledit actionneur (50), dans le même sens et en même temps relativement l'un par rapport à l'autre.

10. Procédé selon la revendication 9, **caractérisé par le fait que** les troisièmes éléments fonctionnels des engrenages épicycloïdaux (30, 40) sont tournés par ledit actionneur (50) en étant en prise rotative avec celui-ci.

11. Procédé selon la revendication 10, **caractérisé par le fait que** les deux troisièmes éléments fonctionnels des engrenages épicycloïdaux (30, 40) sont tournés par ledit actionneur (50) au moyen d'une seule roue motrice qui est en prise rotative avec les troisièmes éléments fonctionnels.

12. Procédé selon la revendication 11, **caractérisé par le fait que** les deux troisièmes éléments fonctionnels qui présentent chacun une denture extérieure différente sont tournés par ledit actionneur (50) au moyen d'un pignon à deux étages (54).

13. Procédé selon l'une quelconque des revendications 9 à 12, **caractérisé par le fait que** les troisièmes éléments fonctionnels sont tournés de façon illimitée.
